(19) Europäisches Patentamt
European Patent Office
Office européen des brevets

(11) **EP 3 899 869 B1**

(12) **FASCICULE DE BREVET EUROPEEN**

(45) Date de publication et mention
de la délivrance du brevet:
**16.04.2025 Bulletin 2025/16**

(21) Numéro de dépôt: **19827646.1**

(22) Date de dépôt: **10.12.2019**

(51) Classification Internationale des Brevets (IPC):
*G06T 7/55* (2017.01)    *G06T 7/73* (2017.01)
*G06T 7/77* (2017.01)    *G06N 5/01* (2023.01)
*G06N 20/20* (2019.01)

(52) Classification Coopérative des Brevets (CPC):
**G06T 7/73; G06N 5/01; G06N 20/20; G06T 7/55;
G06T 7/77;** G06T 2207/10016; G06T 2207/20081;
G06T 2207/30244

(86) Numéro de dépôt international:
**PCT/EP2019/084481**

(87) Numéro de publication internationale:
**WO 2020/126693 (25.06.2020 Gazette 2020/26)**

(54) **PROCEDE DE PREDICTION D'UNE REPRESENTATION EN TROIS DIMENSIONS (3D), DISPOSITIF, SYSTEME ET PROGRAMME D'ORDINATEUR CORRESPONDANTS**

VERFAHREN ZUR VORHERSAGE EINER DREIDIMENSIONALEN (3D) DARSTELLUNG UND ENTSPRECHENDE VORRICHTUNG, SYSTEM UND COMPUTERPROGRAMM

METHOD FOR PREDICTING A THREE-DIMENSIONAL (3D) DEPICTION, AND CORRESPONDING DEVICE, SYSTEM AND COMPUTER PROGRAM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2018 FR 1873626**

(43) Date de publication de la demande:
**27.10.2021 Bulletin 2021/43**

(73) Titulaire: **Fondation B-COM
35510 Cesson-Sévigné (FR)**

(72) Inventeurs:
• **DUONG, Nam-Duong
35700 RENNES (FR)**
• **KACETE, Amine
35000 RENNES (FR)**
• **SOLADIE, Catherine
35340 LA BOUEXIERE (FR)**

(74) Mandataire: **Ermeneux, Bertrand
AVOXA
5 allée Ermengarde d'Anjou
ZAC Atalante Champeaux
CS 40824
35108 Rennes (FR)**

(56) Documents cités:
• **DUONG NAM-DUONG ET AL: "Accurate Sparse
Feature Regression Forest Learning for Real-
Time Camera Relocalization", 2018
INTERNATIONAL CONFERENCE ON 3D VISION
(3DV), IEEE, 5 September 2018 (2018-09-05),
pages 643 - 652, XP033420103, DOI: 10.1109/
3DV.2018.00079**
• **TOMMASO CAVALLARI ET AL: "On-the-Fly
Adaptation of Regression Forests for Online
Camera Relocalisation", ARXIV.ORG, CORNELL
UNIVERSITY LIBRARY, 201 OLIN LIBRARY
CORNELL UNIVERSITY ITHACA, NY 14853, 9
February 2017 (2017-02-09), XP080747283, DOI:
10.1109/CVPR.2017.31**

- **VALENTIN JULIEN ET AL: "Exploiting uncertainty in regression forests for accurate camera relocalization", 2015 IEEE CONFERENCE ON COMPUTER VISION AND PATTERN RECOGNITION (CVPR), IEEE, 7 June 2015 (2015-06-07), pages 4400 - 4408, XP032793941, DOI: 10.1109/CVPR.2015.7299069**
- **MENG LILI ET AL: "Backtracking regression forests for accurate camera relocalization", 2017 IEEE/RSJ INTERNATIONAL CONFERENCE ON INTELLIGENT ROBOTS AND SYSTEMS (IROS), IEEE, 24 September 2017 (2017-09-24), pages 6886 - 6893, XP033266762, DOI: 10.1109/IROS.2017.8206611**
- **SHOTTON JAMIE ET AL: "Scene Coordinate Regression Forests for Camera Relocalization in RGB-D Images", IEEE COMPUTER SOCIETY CONFERENCE ON COMPUTER VISION AND PATTERN RECOGNITION. PROCEEDINGS, IEEE COMPUTER SOCIETY, US, 23 June 2013 (2013-06-23), pages 2930 - 2937, XP032493113, ISSN: 1063-6919, [retrieved on 20131002], DOI: 10.1109/CVPR.2013.377**

**Description**

**Domaine de l'invention**

Le domaine général de l'invention est le traitement de scènes en trois dimensions (3D). L'invention peut s'appliquer en particulier au suivi d'une cible en trois dimensions par un robot ou à la détermination des paramètres de pose d'une caméra d'un système de réalité augmentée.

**Art antérieur**

L'invention se place dans le cadre de la prédiction de représentations en trois dimensions.
L'article Image-based localization using LSTMs for structured feature correlation, dans IEEE International Conference on Computer Vision 5ICCV, Oct 2017, par F. Walch, C. Hazirbas, L. Leal-Taixe, T. Sattler, S. Hilsenbeck, et D. Cremers décrit une solution basée sur l'utilisation de l'apprentissage profond (« deep learning » en langue anglaise) pour déterminer la localisation d'une structure en trois dimensions. L'un des avantages de cette solution est qu'elle n'impose pas le stockage d'images de référence. Par contre, elle ne permet pas la localisation de structures en 3D qui sont en mouvement.
On connait du document Duong Nam-Duong et al. «Accurate Sparse Feature Regression Forest Learning for Real-time Camera Relocalization » 2018 International conference on 3D vision (3DV), IEEE 2018-09-05, pages 643-652, XP033420103 et du document Tommaso Cavallari « On-the-fly Adaptation of Regression Forests for Online Camera Relocalisation » ARXIV.ORG, Cornell University Library, 201 Olin Library Cornell University Ithaca, NY 14853, 2017-02-09, XP0800747283 des solutions basées sur une forêt d'arbres de régression afin d'estimer les paramètres de pose d'une caméra utilisée pour la capture d'une image 2D et divulguant le préambule de la revendication 1.
L'invention vise entre autres, à remédier à l'inconvénient de l'art antérieur précité.

**Exposé de l'invention**

Selon un premier aspect de l'invention, il est proposé un procédé de prédiction d'une représentation en trois dimensions (3D) dans une scène en trois dimensions, en utilisant une ou plusieurs représentations en deux dimensions (2D) (de préférence invariantes), obtenues à partir d'un moins une image générée par une caméra. Selon une caractéristique générale de ce premier aspect de l'invention, le procédé comprend l'obtention d'une forêt d'arbres de régression, et pour ladite au moins une image :

une extraction d'une représentation 2D associée à une ou plusieurs positions au sein de l'image,
une prédiction d'une représentation 3D, correspondant à la représentation 2D extraite, à l'aide de la forêt d'arbres de régression qui définit comprend un ensemble d'associations possibles entre au moins une représentation 2D et une représentation 3D, chaque association possible résultant d'un modèle prédictif,

une évaluation d'une ou plusieurs des associations possibles définies de par la forêt d'arbres de régression, selon un critère de confiance prédéterminé, et
une mise à jour de la forêt d'arbres de régression comprenant une désactivation d'une ou plusieurs associations possibles, en fonction de l'évaluation desdites associations possibles.

En d'autres termes, l'invention propose un procédé permettant notamment de faire évoluer dynamiquement une forêt d'arbres de régression. Cette évolution peut par exemple avoir lieu lorsqu'un ou plusieurs objets de la scène considérée, sont en mouvement. Une mise à jour du modèle de régression, en l'occurrence la forêt d'arbres de régression, permet d'améliorer le pouvoir discriminant de ce dernier et donc la qualité de la prédiction opérée. En outre, adapter le modèle prédictif que constitue la forêt d'arbres de régression, implique une meilleure robustesse face aux perturbations extérieures.
Selon l'invention, au cours de l'étape d'évaluation, la prédiction peut être évaluée pour au moins une association possible, comme étant correcte ou incorrecte selon le critère de confiance prédéterminé.
La détermination d'un critère de confiance permet de qualifier une prédiction comme étant probablement correcte ou incorrecte, et donc d'agir en conséquence quant aux différentes étapes dépendantes de cette prédiction.
Selon l'invention, le modèle prédictif d'une association possible est définie par une distribution caractérisant la au moins une représentation 2D associée à la représentation 3D pour ladite association possible, et par au moins un paramètre parmi l'ensemble des paramètres suivants :

un premier paramètre représentatif d'un statut du modèle prédictif de l'association possible ;

un deuxième paramètre représentatif d'un nombre de prédictions consécutives évaluées comme étant incorrectes pour l'association possible ;
un troisième paramètre représentatif des représentations 2D extraites, associées à la représentation 3D par ladite association possible.

En proposant de nouveaux paramètres pour définir le modèle prédictif, il est possible de contrôler l'évolution de la forêt d'arbres de régression. Ainsi le paramètre représentatif d'un « statut » (par exemple un booléen) permet de contrôler d'une part l'activité et l'influence d'une association possible sur la prédiction finale, et d'autre part l'application du processus de mise à jour des autres paramètres de ce même modèle prédictif. Le deuxième paramètre agit comme un histogramme des prédictions considérées comme correctes. Il joue le rôle d'alarme, permettant de d'amorcer la mise à jour de la forêt d'arbres de régression. Enfin, le troisième paramètre permet de mettre à jour la représentation 3D lors de l'évolution du modèle de régression.

Selon un mode de mise en œuvre, le statut du modèle prédictif d'une association possible est 'actif' lorsque ladite association est activée ou 'passif' lorsque ladite association est désactivée.

Le choix d'un paramètre binaire représentatif du statut d'un modèle prédictif permet de contrôler efficacement le processus de mise à jour. Cela permet notamment d'éviter des mises à jour non pertinente.

Selon un mode de mise en œuvre, ladite mise à jour de la forêt d'arbres de régression comprend pour au moins un modèle prédictif d'une association possible dont le statut est 'actif'

une mise à jour de la valeur du deuxième paramètre pour ladite association possible, à partir du résultat de l'évaluation, et

si la valeur dudit deuxième paramètre est supérieure à un seuil prédéterminé, une désactivation de ladite association possible, sinon le maintien du statut 'actif' du modèle prédictif de ladite association possible.

Le modèle prédictif d'une association possible utilise le deuxième paramètre pour évaluer la qualité de l'association possible pour plusieurs représentations 2D successives. La valeur de ce deuxième paramètre traduit la sensibilité et la stabilité du modèle de régression et permet d'anticiper sa défaillance et de l'adapter à temps de manière automatique.

Selon un mode de mise en œuvre, la mise à jour de la forêt d'arbres de régression comprend pour au moins un modèle prédictif d'une association possible, une mise à jour de la valeur du **troisième** paramètre en fonction de la représentation 2D extraite, et pour au moins un modèle prédictif d'une association possible ayant le statut 'passif' :

- si ledit troisième paramètre mis à jour remplit une condition prédéterminée, une nouvelle détermination de la distribution caractérisant la représentation 3D relative à ladite association possible et une nouvelle détermination de la représentation 3D de ladite association possible, et

  ◦ si la covariance de la distribution nouvellement déterminée est inférieure à un seuil prédéterminé, une validation de ladite mise à jour de la valeur du troisième paramètre, de la distribution nouvellement déterminée et de ladite représentation 3D nouvellement déterminée, et une activation du modèle prédictif de ladite association possible,
  ◦ sinon une réinitialisation de la valeur du troisième paramètre et un maintien du statut 'passif' du modèle prédictif de ladite association possible.

En d'autres termes, le modèle prédictif d'une association possible est capable de réajuster ses propres paramètres au cours des différentes prédictions successives. Pour pouvoir valider définitivement la pertinence des mises à jour, une évaluation des valeurs nouvellement déterminées est déclenchée, basée sur une covariance de la distribution nouvellement déterminée (et plus précisément en pratique sur la trace de la matrice de covariance). Ce mécanisme de contrôle permet de rendre l'étape de mise à jour robuste face à des changements qui n'auraient pas dû entrainer une mise à jour du modèle de régression.

Selon un mode de mise en œuvre, le procédé peut comprendre en outre une mise à jour des paramètres de pose de ladite caméra, en fonction des associations possibles évaluées comme étant correctes ou incorrectes.

Le procédé peut être mise en œuvre par un ordinateur.

Selon un deuxième aspect de l'invention, il est proposé un dispositif pour la prédiction d'une représentation en trois dimensions (3D) dans une scène en trois dimensions, en utilisant une ou plusieurs représentations en deux dimensions (2D), obtenues à partir d'un moins une image générée par une caméra, ledit dispositif comprenant une machine de calcul dédiée à ou configurée pour :

obtenir une forêt d'arbres de régression, et

EP 3 899 869 B1

pour ladite au moins une image :

extraire une représentation 2D associée à une ou plusieurs positions au sein de l'image,
prédire une représentation 3D, correspondant à la représentation 2D extraite, à l'aide de la forêt d'arbres de régression qui définit comprend un ensemble d'associations possibles entre au moins une représentation 2D et une représentation 3D, chaque association possible résultant d'un modèle prédictif, ledit modèle prédictif d'une association possible étant défini par une distribution caractérisant la au moins une représentation 2D associée à la représentation 3D pour ladite association possible, et par les paramètres suivants :

- un premier paramètre représentatif d'un statut du modèle prédictif de l'association possible ;
- un deuxième paramètre représentatif d'un nombre de prédictions consécutives évaluées comme étant incorrectes pour l'association possible;
- un troisième paramètre représentatif des représentations 2D extraites, associées à la représentation 3D par ladite association possible;

évaluer une ou plusieurs des associations possibles définies par la forêt d'arbres de régression, selon un critère de confiance prédéterminé, où la prédiction peut être évaluée pour au moins une association possible, comme étant correcte ou incorrecte selon le critère de confiance prédéterminé et
mettre à jour la forêt d'arbres de régression comprenant une désactivation d'une ou plusieurs associations possibles, en fonction de l'évaluation desdites associations possibles.

Selon un mode de réalisation, ladite machine de calcul est peut être dédiée à ou configurée pour au moins une association possible, évaluer la prédiction comme étant correcte ou incorrecte selon le critère de confiance prédéterminé.
Selon un mode de réalisation, le dispositif peut comprendre en outre un module dédié à ou configuré pour mettre à jour des paramètres de pose relatifs à ladite caméra, en fonction des associations possibles évaluées comme étant correctes ou incorrectes.
Selon un troisième aspect de l'invention, il est proposé un système de réalité augmentée comprenant :

- une caméra apte à acquérir une image d'une scène en trois dimensions,
- un module apte à délivrer une image de sortie à partir d'une image d'entrée acquise par ladite caméra, représentant ladite scène en trois dimensions et au moins un objet réel ou virtuel, à partir :

  ◦ d'une représentation 3D représentant ledit au moins un objet dans la scène, et
  ◦ de paramètres de pose de la caméra,

- un module d'affichage apte à restituer l'image de sortie.

Selon une caractéristique générale de ce troisième aspect de l'invention, le système comprend un dispositif selon le deuxième aspect de l'invention, permettant de mettre à jour les paramètres de pose de ladite caméra.
Selon un quatrième aspect de l'invention, il est proposé un programme d'ordinateur comportant des instructions pour la mise en œuvre d'un procédé selon l'un quelconque des modes de mise en oeuvre du premier aspect de l'invention, lorsque ledit programme est exécuté par un processeur.
Selon un cinquième aspect de l'invention, il est proposé un support d'enregistrement lisible par un ordinateur, sur lequel est enregistré un programme d'ordinateur comprenant des instructions de code de programme pour l'exécution des étapes du procédé selon l'un quelconque des modes de mise en oeuvre du premier aspect de l'invention.

**Liste des figures**

D'autres avantages et caractéristiques de l'invention apparaîtront plus clairement à la lecture de la description suivante d'un mode de mise en œuvre particulier de l'invention, donné à titre de simple exemple illustratif et non limitatif, et des dessins annexés, parmi lesquels :

- la **Figure 1** décrit un mode de mise en œuvre d'une procédé de prédiction d'une représentation 3D selon l'invention ;

- la **Figure 2** représente plus en détail un exemple de l'étape de prédiction d'une représentation 3D à partir de représentations 2D extraites d'une image au format RGB (Right Green Blue » en langue anglaise) ;

- la **Figure 3** décrit un mode de mise en œuvre d'une étape d'apprentissage de façon à obtenir une forêt d'arbre de régression initiale pour une prédiction d'une représentation 3D selon l'invention ;

- la **Figure 4** représente schématiquement un exemple de forêt d'arbres de régression utilisée par le procédé de prédiction d'une représentation 3D selon l'invention ;

- la **Figure 5** illustre plus particulièrement un mode de mise en œuvre de l'étape de mise à jour de la forêt d'arbres de régression selon l'invention ;

- la **Figure 6** illustre très schématiquement une méthode de triangulation d'un point en trois dimensions ; et

- la **Figure 7** illustre un exemple d'un mode de réalisation d'un dispositif selon l'invention.

## Description de modes de mise en œuvre particuliers de l'invention

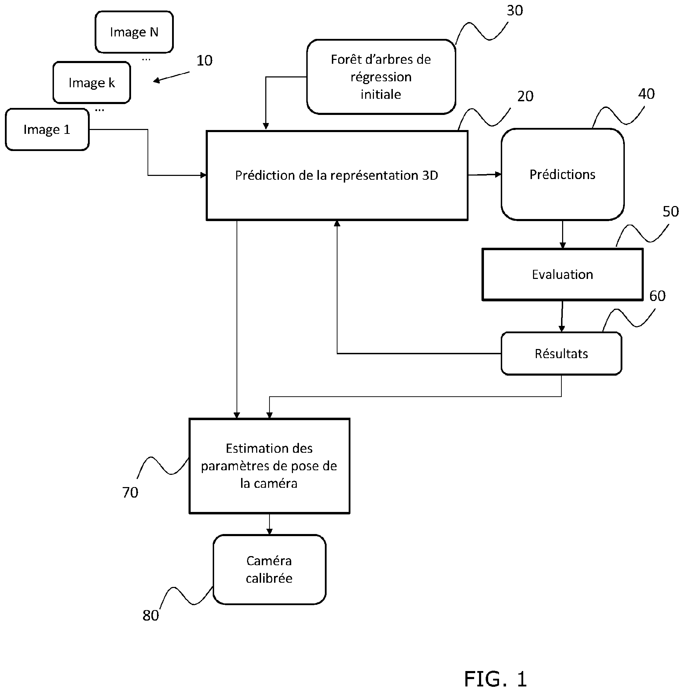

La **Figure 1** illustre un exemple d'un mode de mise en œuvre d'un procédé de prédiction d'une représentation 3D selon l'invention.

Selon ce mode de mise œuvre, des images 10 par exemple au format RGB sont générées par une caméra. Ces images peuvent être extraites d'une séquence vidéo et être temporellement indépendantes. A l'inverse, ces images peuvent former une suite d'images successives, temporellement dépendantes.

Ces images représentent une scène en trois dimensions (3D) capturée par la caméra incluant un ou plusieurs objets tridimensionnels. Une étape de prédiction 20 permet, à partir de ces images 10, de prédire une représentation 3D de l'un de ces objets. Une représentation 3D désigne par exemple un seul point 3D, un nuage de points 3D ou encore la localisation en trois dimensions de ce point ou des points du nuage de points.

De préférence, les images de l'ensemble d'images 10 sont traitées une à une.

La prédiction est effectuée à l'aide d'une forêt d'arbres de régression initiale 20, mettant en correspondance une représentation 3D avec une ou plusieurs représentations en deux dimensions (2D). On rappelle que les forêts d'arbres de régression consistent à faire tourner en parallèle un grand nombre (≈400 par exemple) d'arbres de régression construits aléatoirement, avant de les moyenner.

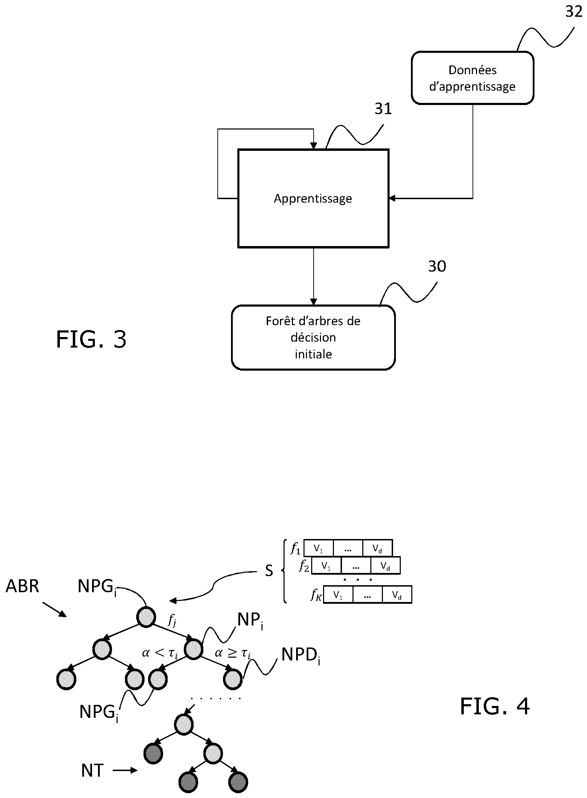

En d'autres termes, la forêt d'arbres de régression définit plusieurs associations possibles entre une ou plusieurs représentations 2D et une représentation 3D. Une représentation 2D peut être par exemple un seul point 2D, une ligne 2D, un motif 2D ou encore la position de l'un de ces éléments. Un exemple d'obtention de la forêt d'arbres de régression initiale est détaillé sur la Figure 3 ci-après.

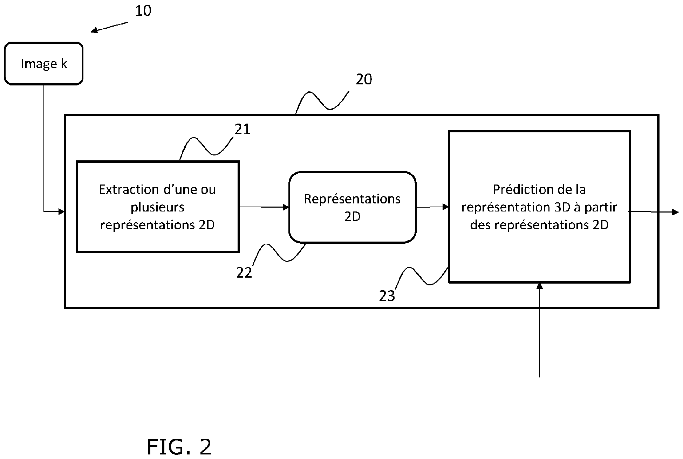

Comme illustré plus en détail sur la **Figure 2,** la prédiction 20 comprend une étape 21 d'extraction d'une ou plusieurs représentations 2D 22 associées à une ou plusieurs positions au sein de l'image RGB considérée. On considère dans la suite de la description qu'une représentation 2D est définie par une caractéristique $f_i$ représentée par un vecteur $f_i$ ($v_1$, $v_2$,..., $v_d$) comme défini ci-après. Par exemple, il vient d = 64.

Plus précisément, un vecteur de caractéristiques définissant une représentation 2D peut être extrait à partir d'une imagette (« patch » en langue anglaise), c'est-à-dire une portion de l'image RGB considérée, disposée ou centrée autour d'un point d'intérêt. Dans la suite de la description, sauf indications contraires, il sera considéré à des fins de simplification qu'une seule imagette est obtenue par image, et qu'un vecteur de caractéristique est extrait de cette même imagette. Ce vecteur de caractéristiques va permettre la prédiction d'une représentation 3D. Le cas de plusieurs imagettes par image est facilement déduit de la description.

Les caractéristiques décrivent une variabilité et une orientation des intensités des pixels de l'image (ou des composantes des pixels) dans le voisinage du point d'intérêt. Une fonction d'extraction $\phi$ permettant d'obtenir un vecteur de caractéristiques $f_i$ pour un point d'intérêt $KP_i$, est définie selon l'équation suivante :

$$f_i = \phi(KP_i).$$

Selon une première variante, la fonction $\phi$ peut réaliser une extraction de caractéristiques invariantes à partir du point d'intérêt $KP_i$ de l'imagette, par exemple selon une technique de type SURF décrite dans le document de Bay et al., intitulé « Speeded-up Robust Features (SURF) », publié dans la revue Computer Vision and Image Understanding , numéro 110, pages 346-359, en 2008. Une caractéristique est dites invariante lorsque qu'elle est associée à un point d'intérêt invariant aux transformations de l'image, telles que les rotations, les transformations ou encore les changements d'échelle.

Selon une deuxième variante, la fonction $\phi$ peut réaliser une extraction de caractéristiques à l'aide d'un système de prédiction automatique supervisé. Le système de prédiction automatique supervisé peut implémenter un réseau de neurones à couches (CNN pour « Convolutional Neural Network » en langue anglaise) comme décrit dans l'article de : A. Kendall, M. Grime, et R. Cipolla : Posenet : A convulational network for real-time 6-DOF camera relocalization, publié dans Proceedings de la IEEE International Conference on Computer Vision, pages 2938-2946, 2015.

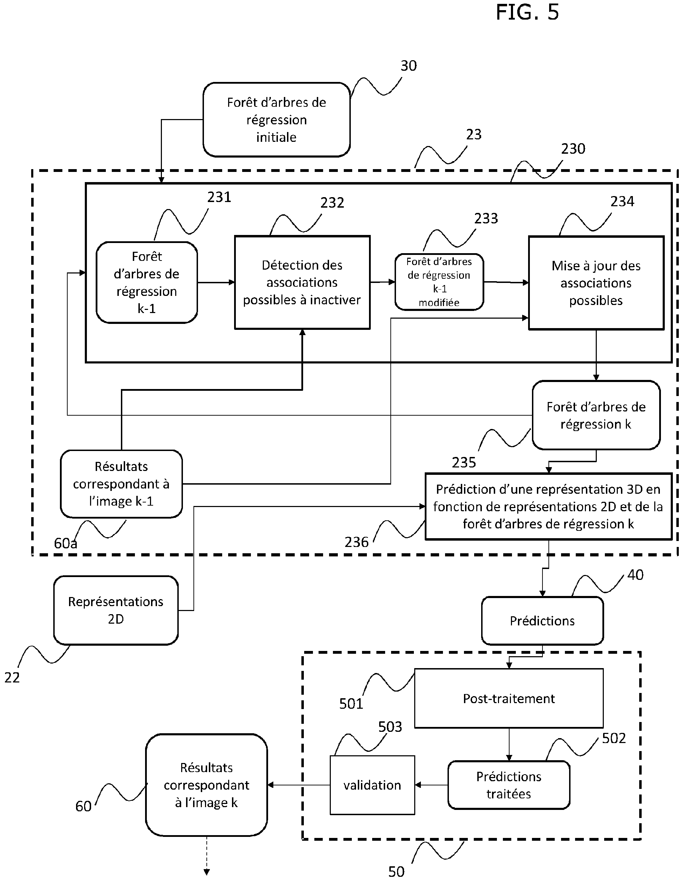

Une étape 23 de prédiction de la représentation 3D à partir des représentations 2D extraites 22 est réalisée comme expliqué ci-après en référence à la Figure 5.

Il est de nouveau fait référence à la Figure 1. A l'issue de l'étape de prédiction 20, une représentation 3D prédite 40 est délivrée.

Celle-ci est traitée à posteriori afin d'évaluer la justesse de la prédiction dans une étape 50. Des résultats 60 sont alors utilisés :

- d'une part pour l'étape 23 de prédiction d'une représentation 3D à partir des représentations 2D extraites, et
- d'autre part dans l'exemple de de la Figure 1, pour une étape d'estimation 70 des paramètres de pose de la caméra et plus précisément, pour la mise à jour des paramètres de pose.

Plus généralement, les résultats 60 basés sur la prédiction 40 de la représentation 3D peuvent être utilisés pour estimer des paramètres relatifs à la calibration de la caméra. Sur la Figure 1, ils sont employés pour l'estimation des paramètres de pose de la caméra. Un principe bien connu de l'estimation de pose consiste à suivre dans la scène, un marqueur dont la position et la géométrie 3D sont connues à priori, de façon à calibrer la camera (position, orientation entre autres).

Dans le contexte de la réalité augmentée, un objet virtuel peut être incrusté dans la scène en trois dimensions à l'aide d'un système de réalité augmentée en fonction des paramètres de pose de la caméra.

Dans un contexte industriel, les paramètres estimés à l'aide des résultats 60 et en particulier les paramètres de pose de la caméra peuvent permettre un suivi de cible :

- lorsque la caméra permet une navigation automatique (dans le contexte des véhicules autonomes par exemple),

- lorsque la caméra est embarquée pour le pilotage d'un robot, ou

- lorsque la caméra est une caméra de surveillance intelligente, avec par exemple un suivi automatique d'un objet dans la scène filmée.

Il est à présent fait référence à la **Figure 3.** Cette figure représente un organigramme qui illustre un exemple d'obtention de la forêt d'arbres de régression initiale 30. De préférence celle-ci est obtenue en mettant en œuvre une phase d'apprentissage préalable 31 à partir d'une base de données d'apprentissage 32. Un exemple de d'une phase d'apprentissage préalable est donné dans l'article de N.-D. Duong, A. Kacete, C. Soladié, P.-Y. Richard, et J. Royan, Accurate sparse feature regression forest learning for real-time camera relocalization, dans 2018 International Conference on 3D Vision (3DV), pages 643-652, IEEE, 2018.

La base de données d'apprentissage 32 comprend un groupe d'images au format RGB. Un ensemble de caractéristiques sont extraites par exemple à l'aide de la méthode SURF décrite ci-avant en référence à la Figure 2. La phase d'apprentissage a pour but de classer chaque caractéristique et donc la représentation 2D quelles définissent, à l'aide d'une forêt d'arbres de régression. Chaque feuille de chaque arbre définit une association possible entre une ou plusieurs représentations 2D et une représentation 3D.

La phase d'apprentissage de la forêt d'arbres de régression requiert d'étiqueter les données de la base d'apprentissage avec une représentation 3D, par exemple définie par ses coordonnées $P_i^w$ dans un repère tridimensionnel $P_i^w = (X_i^w, Y_i^w, Z_i^w)$, $i$ représentant l'indice de la représentation 3D considérée, sur l'ensemble des représentations 3D possibles, et $w$ représentant un premier référentiel utilisé ( « world referential » en langue anglaise). En d'autres termes, l'étiquetage revient à associer à une ou plusieurs représentations 2D extraits des images de la base de données, une réprésentation 3D définie ici par ses coordonnées.

Une méthode possible consiste à effectuer une triangulation entre deux images RGB représentant une scène à au moins deux points de vue différents, afin de réaliser un couplage entre un point d'intérêt que l'on trouve dans chacune des images, et un point en trois dimensions dans le premier référentiel. Enfin, selon une autre méthode, il est possible d'utiliser pour la base de données 32, des images RGB-D issues de la caméra correctement calibrée. Une image RGB-D permet d'associer à chaque pixel de l'image, une valeur de profondeur obtenue à partir des paramètres de pose de la caméra. Dans cette dernière méthode, à partir de la position du point d'intérêt $p_i = (u_i, v_i)$ détecté dans une image RGB-D et de la valeur de profondeur $D_i$ qui lui est associée, une représentation 3D associée $P_i^c = (X_i^c, Y_i^c, Z_i^c)$ dans un deuxième référentiel lié à la caméra, est calculée. Ce calcul est effectué à l'aide d'un modèle de la caméra, basé sur un modèle standard d'un sténopé (ou « pinhole camera » en anglais) tel que défini ci-dessous :

$$P_i^c = D_i K^{-1} \begin{bmatrix} p_i \\ 1 \end{bmatrix}.$$

Où K est une matrice définissant les paramètres intrinsèques de la caméra, et l'exposant c désigne le deuxième référentiel, lié à la caméra. La pose de la caméra est définie par T = [R|t] incluant une matrice de rotation R et un vecteur de translation t pour chaque image, qui sont supposées connues au préalable. La représentation 3D $P_i^w = (X_i^w, Y_i^w, Z_i^w)$ définie dans le premier repère de référence, correspondant au point d'intérêt $p_i$ est obtenue à l'aide de l'équation suivante :

$$\begin{bmatrix} P_i^w \\ 1 \end{bmatrix} = \begin{bmatrix} R & | & t \\ 0 & | & 1 \end{bmatrix} \begin{bmatrix} P_i^c \\ 1 \end{bmatrix}.$$

La **Figure 4** illustre un arbre d'une forêt d'arbres de régression. Une forêt d'arbres de régression dite initiale 30 est obtenue par apprentissage durant l'étape 31.

Une forêt d'arbres de régression est formée d'un ensemble d'arbres, dont un exemple ABR est représenté sur cette Figure 4. Chaque arbre est formé de nœuds NP$_i$, un nœud étant associé à une fonction de coupure (« split » en anglais). Le premier nœud de l'arbre est dénommé nœud racine NR. Chaque nœud terminal NT forme une feuille qui réprésenteune association possible entre une ou plusieurs représentations 2D et une représentation 3D. Cette association possible résulte d'un modèle prédictif fonction des différentes classifications réalisées par chaque fonction de coupure ayant permis d'aboutir au nœud terminal NT.

Plus précisément, un nœud NP$_i$, NR est caractérisé par les paramètres de sa fonction de coupure. Au début de la phase d'apprentissage 31, chaque fonction de coupure est dite faible, c'est-à-dire que pour un nœud parent NP$_i$, la fonction de coupure répartit les données dans un nœud fils à gauche NFG$_i$ ou à droite NFD$_i$ avec un résultat légèrement supérieur à une répartition aléatoire. La fonction de coupure faible pour le nœud NP$_i$ est paramétrisée par $\theta_i = \{ref_i, \tau_i\}$, où $ref_i$ est un vecteur de caractéristiques (ou représentation 2D) de référence, et $\tau_i$ est un seuil prédéterminé.

Durant la phase d'apprentissage 31, un ensemble de vecteurs de caractéristiques est extrait, puis pour chaque arbre de la forêt d'arbres de régression, un sous-ensemble $S_i$ de vecteurs de caractéristiques est choisi de façon aléatoire parmi l'ensemble extrait.

Ainsi, pour chaque arbre, un vecteur de caractéristique $f_j(v_1, v_{2,...}, v_d)$ (j étant un indice de la caractéristique variant entre 1 et un entier K) du sous-ensemble correspondant $S_i$, est traité depuis le nœud racine NR vers un nœud terminal NT (feuille), avec une classification opérée à chaque nœud NP$_i$ par la fonction de coupure associée au nœud considéré :

$$h(f_j, \theta_i) = \begin{cases} 0, si \ d(ref_i, f_j) < \tau_i, classification \ dans \ le \ noeud \ gauche \\ 1, si \ d(ref_i, f_j) \geq \tau_i, classification \ dans \ le \ noeud \ droit \end{cases}$$

où $d(ref_i, f_j) = \|ref_i - f_j\|_2^2$ est une fonction de distance euclidienne $\theta_i = \{refi, \tau i \ | refi \in S_i\}$.

La fonction de coupure $h$ associée à chaque nœud NP$_i$ de l'arbre considéré, est donc appliquée à chacune des caractéristiques $f_j$ de ce sous-ensemble $S_i$ de façon à la classifier dans un nœud de droite NFD$_i$ $(S_i^D)$ ou de gauche NFG$_i$ $(S_i^L)$. La fonction de coupure h dite alors fonction de prédiction (ou prédicteur) faible, est alors entrainée de façon à minimiser la variance spatiale des vecteurs de caractéristiques classés dans les nœuds terminaux NT ou feuille. Ce principe est décrit par exemple dans l'article de J. Shotton, B. Glocker, C. Zach, S. Izadi, A. Criminisi, et A. Fitzgibbon, Scene coordinate regression forests for camera relocalization in rgb-d images, dans Proceedings of the IEEE conference of Computer Vision and Pattern Recognition, pages 2930-2937, 2013. Plus précisément, les paramètres du prédicteur faible sont optimisés en minimisant une énergie entropique, basée sur un gain d'information $Q$ calculé sur le résultat de la séparation effectuée par le prédicteur faible qui peut être défini comme suit :

$$Q(S_i, \theta_i) = \sum_{d \in \mathcal{L}, \mathcal{R}} \frac{|S_i^d(\theta_i)|}{|S_i|} V(S_i^d(\theta_i))$$

avec

$$V(S) = \frac{1}{|S|} \sum_{m \in S} \left\| P_i^w - \overline{P_i^w} \right\|_2^2$$

Où

Q correspond au gain d'information qui représente une mesure entropique permettant d'évaluer la pureté de chaque nœud, c'est-à-dire le degré d'homogénéité des caractéristiques qui lui sont associées à chaque classification opérée par la fonction de coupure,

$\mathcal{L}$ et $\mathcal{R}$ désignent les nœuds respectivement à gauche et à droite d'un nœud $NP_i$, respectivement associés à des caractéristiques $f_j$ ;

$m$ représente les coordonnées du vecteur de caractéristiques considéré dans le premier repère et $\overline{m}$ représente une moyenne de ces coordonnées.

A noter que dans le cas d'un arbre déséquilibré (c'est-à dire avec une répartition déséquilibrée des représentations 2D dans les nœuds terminaux), un apprentissage approfondi peut être requis avec un temps d'apprentissage supérieur. Toutefois, pour limiter ce temps d'apprentissage sans faire de compromis sur la précision des prédictions, les paramètres des fonctions de coupure faibles peuvent être équilibrés dès les niveaux supérieurs de l'arbre. Ainsi la fonction de coupure d'un nœud NPi d'un niveau supérieur apprend à équilibrer les vecteurs de caractéristiques entre son nœud droite et gauche en choisissant une caractéristique de référence $ref_i$ et un seuil $\tau_i$ adéquat, tel que :

$$\theta_i = \left\{ ref_i, \tau_i \,\middle|\, \left| S_i^L \right| = \left| S_i^R \right| \right\}.$$

La forêt d'arbres de régression initiale est acquise lorsqu'une valeur de profondeur maximale est obtenu pour chaque arbre ou que le nombre de données classé dans un nœud ne descend pas en dessous d'une valeur minimale préalablement prédéfinie. Dans chaque nœud terminal NT (feuille) définissant une association possible représentations 2D/représentation 3D, les représentations 2D sont caractérisées par une distribution gaussienne $\eta(P, \overline{P}, \Sigma_P)$, où $\Sigma_P$ représente la covariance de la distribution gaussienne, où $P$ symbolise les coordonnées $P_i^w = (X_i^w, Y_i^w, Z_i^w)$.

On se réfère à présent à la **Figure 5** qui décrit plus précisément l'étape 20 de prédiction d'une représentation 3D et d'évaluation 50.

L'étape 23 comprend une sous-étape 236 de prédiction d'une représentation 3D à partir de vecteurs de caractéristiques extraits d'une imagette issue d'une image d'indice k et d'une forêt d'arbre de régression d'indice k 235.

Cette forêt 235 a été mise à jour lors d'une sous-étape 230, à partir des résultats validés obtenus pour des vecteurs de caractéristiques extraits d'une imagette issue d'une image d'indice k-1, 60a et de la forêt d'arbre de régression d'indice k-1 utilisée pour traiter les vecteurs de caractéristiques extraits de l'image d'indice k-1. Les indices correspondent à un ordre de traitement des images et ne correspondent pas forcément à un ordre temporel.

Selon l'invention le modèle prédictif menant à chaque nœud terminal ou feuille $l$ des arbres de la forêt de régression k-1 est caractérisé par une distribution gaussienne $\eta(P, \overline{P}, \Sigma_P)$ telle que décrite ci-avant en référence à la Figure 4, et trois paramètres (ou au moins l'un de ces trois paramètres, en inférant les autres paramètres par exemple), tel que :

$$l = (\eta, s, n_{false}, S_{data})$$

où,

- $s$ correspond au statut du modèle prédictif d'une feuille - de préférence il peut prendre deux valeurs : « 0 » : statut passif ou « 1 » : statut actif - une feuille dont le modèle prédictif a le statut « passif » est soit une feuille ayant une grande variance ou une feuille correspondant à une association avec une représentation 3D correspondant à un objet en mouvement dans la scène capturée - les prédictions pour lesquelles les représentations 2D sont affectées vers des feuilles dont le statut du modèle prédictif est « passif » ne sont pas considérées comme étant une prédiction 40, seules les feuilles dont le modèle prédictif a le statut « actif » le sont - quand à l'issue de l'étape d'évaluation 50, la justesse d'une prédiction est remise en cause, le satut du modèle prédictif de la feuille en question est changé en « passif » - le statut « actif » peut être rétabli ultérieurement comme décrit ci-après ;

- $n_{false}$ correspond au nombre de prédictions de préférence consécutives, qui ont été validées comme étant incorrectes lors de l'étape 50 - par exemple, la valeur « 0 » est assignée à ce paramètre lorsqu'une prédiction considérée comme juste ou correcte - comme expliqué ci-après, ce paramètre permet de rétablir un statut « actif » ;

- $S_{data}$ est représentatif des représentations 2D extraites, qui sont associées à la représentation 3D par la feuille considérée - ce paramètre permet également de rétablir un statut « actif ».

Dans un premier temps, une étape 232 permet de détecter des associations possibles à inactiver au sein de la forêt d'arbres de régression k-1. Pour cela, l'étape 232 reçoit en entrée les résultats 60a issus du traitement de l'image k-1. Ces résultats 60a permettent de comptabiliser les **prédictions** incorrectes (« outliers » en anglais) pour chaque association possible (ou feuille) dont le statut du modèle prédictif est « actif ». Si une feuille, dont le modèle prédictif a le statut est actif, a donné lieu à une prédiction incorrecte, le paramètre $n_{false}$ est incrémenté de 1. Au contraire, si une feuille dont le statut du modèle prédictif est « actif », a donné lieu à une prédiction correcte (« inlier » en anglais), la valeur du paramètre $n_{false}$ est remise à zéro. Finalement, si l'on détecte que $n_{false} > max_{false}$, $max_{false}$ étant un seuil prédéterminé, le statut s du modèle prédictif de la feuille en question devient « passif ». En effet, l'association possible a donné lieu à $max_{false}$ prédictions incorrectes consécutives, elle est donc inactivée pour la suite du procédé, c'est-à-dire que toute prédiction faite à partir d'une feuille inactivée n'est pas considérée lors de l'étape d'évaluation 50.

En sortie de l'étape de détection 232, on obtient par conséquent une forêt d'arbres de régression k-1 modifiée 233, avec des feuilles ayant la valeur de leur paramètre $n_{false}$ mise à jour, et potentiellement le statut s de leur modèle prédictif inactivé.

Cette forêt d'arbres de régression k-1 modifiée 233 est délivrée en entrée d'une étape 234 de mise à jour des paramètres de l'ensemble des feuilles de l'arbre de régression k-1. L'utilisation de caractéristiques invariantes permettent l'utilisation de la même forêt d'arbres de régression pour une même scène tridimensionnelle, même lorsque des objets sont en mouvement au sein de la scène. En mettant seulement à jour les paramètre des feuilles résultantes, une prédiction optimale des représentations 3D peut être effectuée. L'étape 234 a précisément pour but de mettre à jour les paramètres caractérisant le modèle prédictif des feuilles dont le statut est « passif ». Au cours du traitement de chaque image, des vecteurs de statistiques sont classés à l'aide de la forêt d'arbres de prédiction, permettant de collecter pour chaque feuille, un ensemble de vecteurs de statistiques.

Ainsi, l'étape 234 comprend la mise à jour du contenu du paramètre $S_{data}$ pour chaque feuille dont le modèle prédictif a un statut passif, en ajoutant dans une pile par exemple, chaque nouveau vecteur de caractéristiques classé dans la feuille dont le modèle prédictif a un statut « passif ». Si la taille de la pile $S_{data}$ est supérieure à un seuil prédéterminé $max_{data}$ ($|S_{data}| > max_{data}$), une nouvelle distribution $\eta(P,\overline{P},\Sigma_P)$ de la feuille passive est déterminée. Les coordonnées de la représentation 3D, $P$, sont alors recalculées à l'aide d'une fonction $F_{label}$ tel que $P = F_{label}(S_{data})$. Le modèle prédictif de la forêt d'arbres de régression est ainsi rédéfini. Enfin, si $|\Sigma_P| < max_{var}$ (ou si encore la trace de la matrice de covariance est inférieure à un seuil prédéterminé), $max_{var}$ étant un seuil prédéterminé, la mise à jour de la distribution gaussienne et de la mise à jour de $P$ est validée et le statut « actif » est réactivé. A l'inverse, si $|\Sigma_P| \geq max_{var}$ la pile de vecteurs de caractéristiques de $S_{data}$ est réinitialisée et le statut est maintenu à l'état « passif ».

La forêt d'arbres de régression 235 est alors délivrée pour procéder à la prédiction d'une représentation 3D à partir des vecteurs de caractéristiques (représentations 2D) extrait de l'image d'indice k.

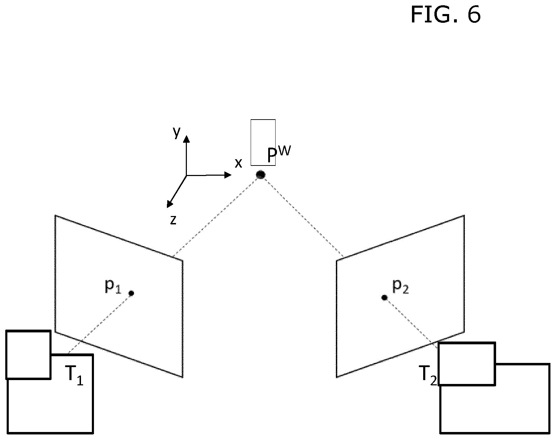

L'invention propose donc d'utilise une forêt d'arbres de régression dynamique, où les associations possibles entre une ou des représentations 2D et une représentation 3D peut évoluer au cours du temps. L'invention est particulièrement adaptée à l'estimation des paramètres de pose d'une caméra capturant une scène tridimensionnelle dans laquelle un ou plusieurs objets sont en mouvement. La modification de la forêt d'arbres de régression engendrée par le mouvement d'un objet, entraîne une meilleure estimation à la volée, des paramètres de pose, pour une meilleure capture de la scène. Cette mise à jour des paramètres de pose de la caméra est décrite plus en détail en référence à la Figure 6 ci-après.

A noter que pour la première image traitée, la forêt d'arbres de régression utilisée est la forêt d'arbres de régression initiale 30. Les étapes 232 et 234 ne modifient pas la forêt 30 lors du traitement de la première image, à défaut de résultats 60 a existants. Puis cette forêt d'arbres de régression initiale 30 est progressivement mise à jour, au fur et à mesure que des images sont traitées et que des résultats sont générés.

L'étape de prédiction 236 classe les vecteurs de caractéristiques 22 à l'aide de la forêt d'arbre de régression d'indice k, de façon à prédire une représentation 3D. Si l'on généralise à plusieurs imagettes obtenues par image, il vient pour l'image k un ensemble de vecteurs de caractéristiques $\{f_i\}$ correspondant respectivement à un ensemble d'imagettes $\{Im_i\}$. Chaque vecteur de caractéristiques est traité par la forêt d'arbres de décision, qui retourne pour une entrée $\{Im_i, f_i\}$ une prédiction d'une représentation 3D à une feuille $l_j^i$ de l'arbre d'indice j de ladite forêt. Lorsque l'ensemble des vecteurs de caractéristiques sont traités, un ensemble $LP = \{l_j^i\}$ de feuilles ayant donné lieu à une prédiction est obtenu. Toutes les feuilles de l'ensemble LP ayant un statut « actif » sont utilisées en entrée d'une étape de post-traitement 501 pour calculer des prédictions traitées 502 à l'aide d'une fonction de post-traitement $F_{post}$ comme par exemple celle proposée ci-dessous :

$$F_{post}\left(\{Im_i, f_i, l_j^i \mid s_j^i = 1\}\right)$$

où $s_j^i$ est le statut de la feuille (ou association possible) de l'arbre j ayant servi à la prédiction.

Ensuite une étape de validation 503 permet de calculer un critère de confiance pour les prédictions post-traitées. L'étape de validation permet de définir celles qui sont correctes (« inliers » en langue anglaise) ou incorrectes (« outliers » en langue anglaise). La validation s'effectue à l'aide d'une fonction de validation $F_{val}$, par exemple :

$$F_{val}\left(\alpha(F_{post}, Im_i, l_j^i)\right) = \left\{ \begin{array}{lll} 1, & \alpha(.) < max_{val}, & \text{prédiction correcte} \\ 0, & \alpha(.) \geq max_{val}, & \text{prédiction incorrecte} \end{array} \right.$$

où $\alpha(F_{post}, Im_i, l_j^i)$ est une fonction d'arreur de la prédiction associé à la feuille $l_j^i$ basée sur $F_{post}$ et l'imagette $Im_i$. Les étapes de post-traitement 501 et de validation 503 forment l'étape d'évaluation 50.

Après la validation, sont obtenus les résultats 60 qui comprennent $n_{inliers}$ prédictions considérées comme correctes et $n_{outliers}$ prédictions considérées comme étant incorrectes. Un critère de confiance est déterminé et comparé à un seuil prédéterminé, de façon que la mise à jour effectuée lors de l'étape 234 soit validée lorsque le critère de confiance est supérieur au seuil prédéterminé tel que :

$$\frac{n_{inliers}}{n_{inliers} + n_{outliers}} > max_{conf},$$

où $max_{conf}$ est un seuil qui permet de valider l'étape de mise à jour 234 pour la forêt d'arbres de régression d'indice k, qui sera utiliser pour le traitement de l'image k+1.

On se rapporte à présent à la **Figure 6** qui illustre l'étape d'estimation des paramètres de pose de la caméra 70. Cette étape prend en compte uniquement les prédictions associées à des feuilles dont le modèle prédictif a le statut « actif ». Selon un mode de réalisation, les résultats correspondants à trois points d'intérêt dans une image d'entrée k peuvent être requis pour réaliser l'estimation. Selon un autre mode de réalisation utilisant un algorithme connu de l'homme du métier, dit PnP (pour « Perspective-n-Points » en langue anglaise) permet de s'affranchir de cette contrainte. Un autre mode de réalisation propose de combiner l'algorithme PnP et une méthode dit RANSAC (pour « RANdom Sample Consensus » en langue anglaise) pour supprimer les prédictions définies comme incorrectes (« outliers ») et conserver uniquement les prédictions définies comme correctes (« inliers »).

Durant l'étape de validation 503 préalable à l'étape d'estimation 70, la méthode de RANSAC permet alors de générer un ensemble de poses hypothétiques $\mathcal{T} = \{\mathcal{T}_i\}$ et appliquant l'algorithme PnP sur un sous-ensemble choisi aléatoirement parmi les prédictions de représentations 3D. Puis les prédictions correctes les plus satisfaisantes sont obtenues en maximisant ce nombre de prédictions correctes correspondant à chaque pose hypothétique basée sur une erreur de re-projection :

$$\begin{array}{c} max \\ \forall T_i \in \mathcal{T} \end{array} \sum_{p_j \in p} \rho(\alpha_{ij})$$

$$\rho(\alpha_{ij}) = \left\{ \begin{array}{ll} 1, & si\ \alpha_{ij} < \tau \\ 0, & sinon \end{array} \right.$$

où $\alpha_{ij} = \|p_j - KT_i^{-1}\hat{P}_j^w\|^2$ et $\tau$ est le seuil maximum d'erreur de reprojection qui définit une prédiction correcte et où la fonction $\rho(.)$ correspond à une métrique permettant d'évaluer le justesse ou non d'une prédiction. Cette fonction est un autre exemple de fonction de validation $F_{val}$ de l'étape 503, dans le cas où les résultats 60 sont utilisés pour une estimation des paramètres de pose.

Le point d'intérêt transformé par la pose d'indice i, ayant un indice j, est considéré comme donnant lieu à une prédiction correcte pour les poses hypothétiques $\{\mathcal{T}_i\}$ si $\rho(\alpha_{ij})=1$.

Les paramètres de la pose finale $T$ de la caméra sont obtenus en appliquant dans l'étape 70 l'algorithme PnP sur toutes les prédictions correctes (« inliers ») afin de minimiser la fonction E(t) d'erreur de re-projection :

$$E(T) = \sum_{i \in \mathcal{J}} \left\| p_i - KT^{-1}\widehat{P_i^w} \right\|^2$$

où $\mathcal{J}$ correspond à l'ensemble des indices des prédiction correctes, $E(T)$ étant l'erreur de re-projection correspondant à une énergie que l'on cherche à minimiser. En d'autres termes, en minimisant la fonction $E$, on obtient la pose $T$ optimale.

Les paramètres de pose de la caméra peuvent être mis à jour en fonction de la proportion de prédictions correctes : $\frac{n_{inliers}}{n_{inliers}+n_{outliers}}$ . Quand cette proportion est suffisamment grande seulement, une mise à jour des paramètres estimés est effectuée.

L'estimation des paramètres de pose de la caméra consiste à les recalculer à partir des résultats des étapes de détection 232 et de mise à jour 234. Dans ce cas, les données stockées dans la pile $S_{data}$ de chaque feuille passive comprend la position $p_i$ associée au point d'intérêt 2D et la pose de la caméra $T$. Quand la taille de la pile dépasse une valeur prédéterminée ($max_{data}$), la valeur de la représentation 3D associée à la feuille passive est réévaluée en utilisant un algorithme de triangulation à partir de deux points d'intérêt stockés dans les piles $p_1$ et $p_2$ représentés sur la Figure 6. Ces points d'intérêt sont stockés avec leurs poses respectives $T_1$ et $T_2$. Une telle méthode de triangulation est par exemple décrite dans l'article R. Hartley et A. Zisserman, Multiple view geometry in computer vision, Robotica, 23(2) :271-271, 2005.

La nouvelle valeur $P^W$ de la représentation 3D dans le premier référentiel, est obtenue en résolvant le système d'équation ci-dessous :

$$\begin{cases} p_1 * (KT_1^{-1}P^W) = 0 \\ p_2 * (KT_2^{-1}P^W) = 0 \end{cases}$$

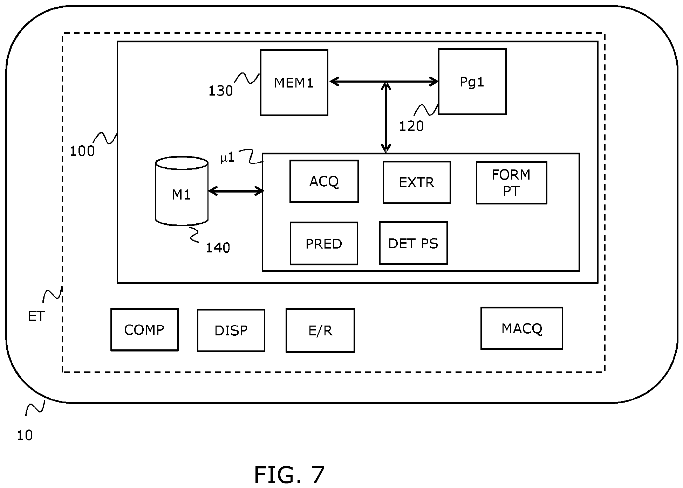

La **Figure 7** illustre un mode de réalisation d'un dispositif 100 (pour un émetteur ou un récepteur) configuré pour mettre en œuvre un mode de réalisation d'un procédé selon l'invention. Le dispositif 100 comprend une mémoire vive 130 (par exemple une mémoire RAM), une unité de traitement 110 équipée par exemple d'un processeur, et pilotée par un programme d'ordinateur stocké dans une mémoire morte 120 (par exemple une mémoire ROM ou un disque dur). A l'initialisation, les instructions de code du programme d'ordinateur sont par exemple chargées dans la mémoire vive 130 avant d'être exécutées par le processeur de l'unité de traitement 110.

Ce dispositif 100 peut être intégré dans un système de réalité augmentée (non représenté) pouvant comprendre en outre :

une caméra apte à acquérir une image d'une scène en trois dimensions, dont les paramètres de pose sont estimés par le dispositif 100,

un module apte à délivrer une image de sortie à partir d'une image d'entrée acquise par ladite caméra, représentant ladite scène en trois dimensions et au moins un objet réel ou virtuel, à partir d'une représentation 3D représentant ledit au moins un objet dans la scène et de paramètres de pose de la caméra, et

un module d'affichage apte à restituer l'image de sortie.

La Figure 7 illustre une manière particulière, parmi plusieurs possibles, de réaliser le dispositif100 apte à mettre en œuvre au moins certaines étapes du procédé selon l'invention. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le moyen de traitement est réalisé avec une machine de calcul reprogrammable, le programme correspondant (c'est-à-dire la séquence d'instructions) pourra être stocké dans un médium de stockage amovible ou non, ce médium de stockage étant lisible partiellement ou totalement par un ordinateur ou un processeur.

Il va de soi que les modes de mise en œuvre et de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

EP 3 899 869 B1

**Revendications**

1. Procédé de prédiction d'une représentation en trois dimensions (3D) dans une scène en trois dimensions, en utilisant une ou plusieurs représentations en deux dimensions (2D), obtenues à partir d'un moins une image générée par une caméra,

le procédé comprenant l'obtention d'une forêt d'arbres de régression, et pour ladite au moins une image :

une extraction (21) d'une représentation 2D associée à une ou plusieurs positions au sein de l'image, **caractérisé par le fait qu'**il comprend en outre, pour ladite au moins une image :

une prédiction (236) d'une représentation 3D, correspondant à la représentation 2D extraite, à l'aide de la forêt d'arbres de régression qui comprend un ensemble d'associations possibles entre au moins une représentation 2D et une représentation 3D, chaque association possible résultant d'un modèle prédictif, ledit modèle prédictif d'une association possible étant défini par une distribution caractérisant la au moins une représentation 2D associée à la représentation 3D pour ladite association possible, et par les paramètres suivants :

- un premier paramètre représentatif d'un statut du modèle prédictif de l'association possible ;
- un deuxième paramètre représentatif d'un nombre de prédictions consécutives évaluées comme étant incorrectes pour l'association possible ;
- un troisième paramètre représentatif des représentations 2D extraites, associées à la représentation 3D par ladite association possible.

une évaluation (50) d'une ou plusieurs des associations possibles de la forêt d'arbres de régression, selon un critère de confiance prédéterminé, au cours de laquelle la prédiction peut être évaluée pour au moins une association possible, comme étant correcte ou incorrecte selon le critère de confiance prédéterminé et
une mise à jour (230) de la forêt d'arbres de régression comprenant une désactivation d'une ou plusieurs associations possibles, en fonction de l'évaluation desdites associations possibles.

2. Procédé selon la revendication 1, dans lequel le statut du modèle prédictif d'une association possible est 'actif' lorsque ladite association est activée ou 'passif' lorsque ladite association est désactivée.

3. Procédé selon la revendication 2, dans lequel ladite mise à jour de la forêt d'arbres de régression comprend pour au moins un modèle prédictif d'une association possible dont le statut est 'actif'

- une mise à jour de la valeur du deuxième paramètre pour ladite association possible, à partir du résultat de l'évaluation, et
- si la valeur dudit deuxième paramètre est supérieure à un seuil prédéterminé, une désactivation (232) de ladite association possible, sinon le maintien du statut 'actif' du modèle prédictif de ladite association possible.

4. Procédé selon l'une des revendications 1 à 3, dans lequel la mise à jour de la forêt d'arbres de régression comprend pour au moins un modèle prédictif d'une association possible, une mise à jour (234) de la valeur du troisième paramètre en fonction de la représentation 2D extraite, et pour au moins un modèle prédictif d'une association possible ayant le statut 'passif' :

- si ledit troisième paramètre mis à jour remplit une condition prédéterminée, une nouvelle détermination de la distribution caractérisant la représentation 3D relative à ladite association possible et une nouvelle détermination de la représentation 3D de ladite association possible, et

∘ si la covariance de la distribution nouvellement déterminée est inférieure à un seuil prédéterminé, une validation de ladite mise à jour de la valeur du troisième paramètre, de la distribution nouvellement déterminée et de ladite représentation 3D nouvellement déterminée, et une activation du modèle prédictif de ladite association possible,
∘ sinon une réinitialisation de la valeur du troisième paramètre et un maintien du statut 'passif' du modèle prédictif de ladite association possible.

5. Procédé selon l'une quelconque des revendications 1 à 4, comprenant en outre une mise à jour des paramètres de pose de ladite caméra, en fonction des associations possibles évaluées comme étant correctes ou incorrectes.

6. Procédé selon l'une quelconque des revendications précédentes, **caractérisé par le fait qu'**il est mise en œuvre par un ordinateur.

7. Dispositif (100) pour la prédiction d'une représentation en trois dimensions (3D) dans une scène en trois dimensions, en utilisant une ou plusieurs représentations en deux dimensions (2D), obtenues à partir d'un moins une image générée par une caméra, ledit dispositif comprenant une machine de calcul dédiée à ou configurée pour :

obtenir une forêt d'arbres de régression, et
pour ladite au moins une image :

extraire une représentation 2D associée à une ou plusieurs positions au sein de l'image, prédire une représentation 3D, correspondant à la représentation 2D extraite, à l'aide de la forêt d'arbres de régression qui comprend un ensemble d'associations possibles entre au moins une représentation 2D et une représentation 3D, chaque association possible résultant d'un modèle prédictif, ledit modèle prédictif d'une association possible étant défini par une distribution caractérisant la au moins une représentation 2D associée à la représentation 3D pour ladite association possible, et par les paramètres suivants :

- un premier paramètre représentatif d'un statut du modèle prédictif de l'association possible ;
- un deuxième paramètre représentatif d'un nombre de prédictions consécutives évaluées comme étant incorrectes pour l'association possible ;
un troisième paramètre représentatif des représentations 2D extraites, associées à la représentation 3D par ladite association possible

évaluer une ou plusieurs des associations possibles définies par la forêt d'arbres de régression, selon un critère de confiance prédéterminé, où la prédiction peut être évaluée pour au moins une association possible, comme étant correcte ou incorrecte selon le critère de confiance prédéterminé et
mettre à jour la forêt d'arbres de régression comprenant une désactivation d'une ou plusieurs associations possibles, en fonction de l'évaluation desdites associations possibles.

8. Dispositif selon la revendication 7, dans laquelle ladite machine de calcul est dédiée à ou configurée pour au moins une association possible, évaluer la prédiction comme étant correcte ou incorrecte selon le critère de confiance prédéterminé.

9. Dispositif selon la revendication 8, comprenant en outre un module dédié à ou configuré pour mettre à jour des paramètres de pose relatifs à ladite caméra, en fonction des associations possibles évaluées comme étant correctes ou incorrectes.

10. Système de réalité augmentée comprenant :

- une caméra apte à acquérir une image d'une scène en trois dimensions,
- un module apte à délivrer une image de sortie à partir d'une image d'entrée acquise par ladite caméra, représentant ladite scène en trois dimensions et au moins un objet réel ou virtuel, à partir :

◦ d'une représentation 3D représentant ledit au moins un objet dans la scène, et
◦ de paramètres de pose de la caméra,

- un module d'affichage apte à restituer l'image de sortie,

**caractérisé par le fait qu'**il comprend un dispositif selon la revendication 9 permettant de mettre à jour les paramètres de pose de ladite caméra.

11. Programme d'ordinateur comportant des instructions pour la mise en oeuvre d'un procédé selon l'une quelconque des revendications 1 à 6, lorsque ledit programme est exécuté par un processeur.

12. Support d'enregistrement lisible par un ordinateur, sur lequel est enregistré un programme d'ordinateur comprenant des instructions de code de programme pour l'exécution des étapes du procédé l'une quelconque des revendications 1 à 6.

**Patentansprüche**

1. Verfahren zur Vorhersage einer dreidimensionalen (3D) Darstellung in einer dreidimensionalen Szene unter Verwendung einer oder mehrerer zweidimensionaler (2D) Darstellungen, die aus mindestens einem von einer Kamera erzeugten Bild erhalten werden,

   wobei das Verfahren das Erhalten eines Regressionsbaum-Forests umfasst und für das mindestens eine Bild:

   eine Extraktion (21) einer 2D-Darstellung, die einer oder mehreren Positionen innerhalb des Bildes zugeordnet ist,
   **dadurch gekennzeichnet, dass** es ferner für das mindestens eine Bild umfasst:

   eine Vorhersage (236) einer 3D-Darstellung, die der extrahierten 2D-Darstellung entspricht, mit Hilfe des Regressionsbaum-Forests, der eine Gruppe möglicher Zuordnungen zwischen mindestens einer 2D-Darstellung und einer 3D-Darstellung umfasst, wobei jede mögliche Zuordnung aus einem Vorhersagemodell resultiert, wobei das Vorhersagemodell einer möglichen Zuordnung durch eine Verteilung definiert ist, die die mindestens eine 2D-Darstellung kennzeichnet, die der 3D-Darstellung für die mögliche Zuordnung zugeordnet ist, und durch die folgenden Parameter:

   - einen ersten Parameter, der für einen Status des Vorhersagemodells der möglichen Zuordnung repräsentativ ist;
   - einen zweiten Parameter, der für eine Anzahl aufeinanderfolgender Vorhersagen repräsentativ ist, die für die mögliche Zuordnung als falsch bewertet wurden;
   - einen dritten Parameter, der für die extrahierten 2D-Darstellungen repräsentativ ist, die durch die mögliche Zuordnung der 3D-Darstellung zugeordnet sind,

   eine Bewertung (50) einer oder mehrerer der möglichen Zuordnungen des Regressionsbaum-Forests gemäß einem vorbestimmten Vertrauenskriterium, bei der die Vorhersage für mindestens eine mögliche Zuordnung als richtig oder falsch gemäß dem vorbestimmten Vertrauenskriterium bewertet werden kann, und
   eine Aktualisierung (230) des Regressionsbaum-Forests, die in Abhängigkeit von der Bewertung der möglichen Zuordnungen eine Deaktivierung einer oder mehrerer möglicher Zuordnungen umfasst.

2. Verfahren nach Anspruch 1, wobei der Status des Vorhersagemodells einer möglichen Zuordnung ‚aktiv' ist, wenn die Zuordnung aktiviert ist, oder 'passiv', wenn die Zuordnung deaktiviert ist.

3. Verfahren nach Anspruch 2, wobei die Aktualisierung des Regressionsbaum-Forests für mindestens ein Vorhersagemodell einer möglichen Zuordnung, deren Status ‚aktiv' ist, umfasst

   - eine Aktualisierung des Wertes des zweiten Parameters für die mögliche Zuordnung, ausgehend vom Ergebnis der Bewertung, und
   - wenn der Wert des zweiten Parameters über einem vorgegebenen Schwellenwert liegt, eine Deaktivierung (232) der möglichen Zuordnung, andernfalls die Beibehaltung des Status 'aktiv' des Vorhersagemodells der möglichen Zuordnung.

4. Verfahren nach einem der Ansprüche 1 bis 3, wobei die Aktualisierung des Regressionsbaum-Forests für mindestens ein Vorhersagemodell einer möglichen Zuordnung eine Aktualisierung (234) des Wertes des dritten Parameters in Abhängigkeit von der extrahierten 2D-Darstellung umfasst, und für mindestens ein Vorhersagemodell einer möglichen Zuordnung mit dem Status ‚passiv':

   - wenn der aktualisierte dritte Parameter eine vorgegebene Bedingung erfüllt, eine neue Bestimmung der Verteilung, die die 3D-Darstellung in Bezug auf die mögliche Zuordnung kennzeichnet, und eine neue Bestimmung der 3D-Darstellung der möglichen Zuordnung, und

   ∘ wenn die Kovarianz der neu bestimmten Verteilung unter einem vorbestimmten Schwellenwert liegt, eine Validierung der Aktualisierung des Werts des dritten Parameters, der neu bestimmten Verteilung und der neu bestimmten 3D-Darstellung und eine Aktivierung des Vorhersagemodells der möglichen Zuordnung,
∘ andernfalls eine Rücksetzung des Wertes des dritten Parameters und eine Beibehaltung des Status ‚passiv' des Vorhersagemodells der möglichen Zuordnung.

5. Verfahren nach einem der Ansprüche 1 bis 4, das ferner eine Aktualisierung der Parameter für die Positionierung der Kamera umfasst, in Abhängigkeit von den möglichen Zuordnungen, die als richtig oder falsch bewertet wurden.

6. Verfahren nach einem der vorhergehenden Ansprüche, **dadurch gekennzeichnet, dass** es von einem Rechner ausgeführt wird.

7. Vorrichtung (100) zur Vorhersage einer dreidimensionalen (3D) Darstellung in einer dreidimensionalen Szene unter Verwendung einer oder mehrerer zweidimensionaler (2D) Darstellungen, die aus mindestens einem von einer Kamera erzeugten Bild erhalten werden, wobei die Vorrichtung eine Rechenmaschine umfasst, die vorgesehen ist oder ausgelegt ist, um:

einen Regressionsbaum-Forest zu erhalten und
für das mindestens eine Bild:

eine 2D-Darstellung zu extrahieren, die einer oder mehreren Positionen innerhalb des Bildes zugeordnet ist, eine 3D-Darstellung vorherzusagen, die der extrahierten 2D-Darstellung entspricht, mit Hilfe des Regressionsbaum-Forests, der eine Gruppe möglicher Zuordnungen zwischen mindestens einer 2D-Darstellung und einer 3D-Darstellung umfasst, wobei jede mögliche Zuordnung aus einem Vorhersagemodell resultiert, wobei das Vorhersagemodell einer möglichen Zuordnung durch eine Verteilung definiert ist, die die mindestens eine 2D-Darstellung kennzeichnet, die der 3D-Darstellung für die mögliche Zuordnung zugeordnet ist, und durch die folgenden Parameter:

- einen ersten Parameter, der für einen Status des Vorhersagemodells der möglichen Zuordnung repräsentativ ist;
- einen zweiten Parameter, der für eine Anzahl aufeinanderfolgender Vorhersagen repräsentativ ist, die für die mögliche Zuordnung als falsch bewertet wurden;

einen dritten Parameter, der für die extrahierten 2D-Darstellungen repräsentativ ist, die durch die mögliche Zuordnung der 3D-Darstellung zugeordnet sind,
eine oder mehrere der möglichen Zuordnungen des Regressionsbaum-Forests gemäß einem vorbestimmten Vertrauenskriterium zu bewerten, wobei die Vorhersage für mindestens eine mögliche Zuordnung als richtig oder falsch gemäß dem vorbestimmten Vertrauenskriterium bewertet werden kann, und
den Regressionsbaum-Forest zu aktualisieren, umfassend in Abhängigkeit von der Bewertung der möglichen Zuordnungen eine Deaktivierung einer oder mehrerer möglicher Zuordnungen.

8. Vorrichtung nach Anspruch 7, wobei die Rechenmaschine für mindestens eine mögliche Zuordnung bestimmt oder ausgelegt ist, die Vorhersage als richtig oder falsch gemäß dem vorbestimmten Vertrauenskriterium zu bewerten.

9. Vorrichtung nach Anspruch 8, die ferner ein Modul umfasst, das dazu bestimmt oder ausgelegt ist, die Positionsparameter der Kamera in Abhängigkeit von den möglichen Zuordnungen, die als richtig oder falsch bewertet wurden, zu aktualisieren.

10. Erweiterte Realität-System, umfassend:

- eine Kamera, die imstande ist, ein Bild einer dreidimensionalen Szene aufzunehmen,
- ein Modul, das imstande ist, ein Ausgangsbild aus einem von der Kamera aufgenommenen Eingangsbild zu liefern, das die dreidimensionale Szene und mindestens ein reales oder virtuelles Objekt darstellt, ausgehend von:

∘ einer 3D-Darstellung, die das mindestens eine Objekt in der Szene darstellt, und
∘ Kamerapositionierungsparametern,

- ein Anzeigemodul, das imstande ist, das Ausgabebild wiederzugeben,

**dadurch gekennzeichnet, dass** es eine Vorrichtung nach Anspruch 9 umfasst, die es ermöglicht, die Positionierungsparameter der Kamera zu aktualisieren.

11. Rechnerprogramm, das Anweisungen zur Durchführung eines Verfahrens nach einem der Ansprüche 1 bis 6 aufweist, wenn das Programm von einem Prozessor ausgeführt wird.

12. Rechnerlesbares Aufzeichnungsmedium, auf dem ein Rechnerprogramm aufgezeichnet ist, das Programmcodeanweisungen zur Ausführung der Verfahrensschritte nach einem der Ansprüche 1 bis 6 umfasst.

**Claims**

1. A method for predicting a three-dimensional (3D) representation in a 3D scene, using one or more two-dimensional (2D) representations obtained from at least one camera-generated image,
   the method comprising a step for obtaining a forest of regression trees, and for said at least one image:

   extracting (21) a 2D representation associated with one or more positions within the image,
   wherein the method further comprises, for said at least one image:

   - predicting (236) a 3D representation, corresponding to the extracted 2D representation, using the regression tree forest which comprises a set of possible associations between at least one 2D representation and a 3D representation, each possible association resulting from a predictive model, said predictive model of a possible association being defined by a distribution characterising the at least one 2D representation associated with the 3D representation for said possible association, and by the following parameters:

   - a first parameter representative of a status of the predictive model of the possible association;
   - a second parameter representative of a number of consecutive predictions evaluated as incorrect for the possible association;
   - a third parameter representative of the extracted 2D representations associated with the 3D representation by said possible association.

   evaluating (50) one or more of the possible associations of the regression tree forest, according to a predetermined confidence criterion, in which the prediction can be evaluated for at least one possible association as being correct or incorrect according to the predetermined confidence criterion, and
   updating (230) the regression tree forest comprising a deactivation of one or more possible associations, depending on the evaluation of said possible associations.

2. The method according to claim 1, wherein the status of the predictive model of a possible association is 'active' when said association is enabled or 'passive' when said association is disabled.

3. The method according to claim 2, wherein said updating of the regression tree forest comprises for at least one predictive model of a possible association whose status is 'active'

   - updating the value of the second parameter for said possible association, based on the result of the evaluation, and
   - if the value of said second parameter is above a predetermined threshold, deactivating (232) said possible association, otherwise maintaining the 'active' status of the predictive model of said possible association.

4. The method according to any of claims 1 to 3, wherein updating the regression tree forest comprises for at least one predictive model of a possible association, updating (234) the value of the third parameter according to the extracted 2D representation, and for at least one predictive model of a possible association having the status 'passive':

   - if said third updated parameter meets a predetermined condition, a new determination of the distribution characterizing the 3D representation related to said possible association and a new determination of the 3D representation of said possible association, and

     ○ if the covariance of the newly determined distribution is below a predetermined threshold, a validation of said update of the value of the third parameter, the newly determined distribution and said newly determined 3D representation, and an activation of the predictive model of said possible association,
◦ otherwise a reset of the value of the third parameter and a maintenance of the 'passive' status of the predictive model of said possible association.

5. The method according to any one of claims 1 to 4, further comprising an update of the pose parameters of said camera, according to the possible associations assessed as correct or incorrect.

6. The method according to any of the preceding claims, **characterised by** the fact that it is implemented by a computer.

7. A device (100) for predicting a three-dimensional (3D) representation in a three-dimensional scene, using one or more two-dimensional (2D) representations, obtained from at least one image generated by a camera, said device comprising a computing machine dedicated to or configured for:

obtaining a forest of regression trees, and
for said at least one image:

extracting a 2D representation associated with one or more positions within the image,

- predicting a 3D representation, corresponding to the extracted 2D representation, using the regression tree forest which comprises a set of possible associations between at least one 2D representation and a 3D representation, each possible association resulting from a predictive model, said predictive model of a possible association being defined by a distribution characterising the at least one 2D representation associated with the 3D representation for said possible association, and by the following parameters:

- a first parameter representative of a status of the predictive model of the possible association;
- a second parameter representative of a number of consecutive predictions evaluated as incorrect for the possible association;
- a third parameter representative of the extracted 2D representations associated with the 3D representation by said possible association.

evaluating one or more of the possible associations defined by the forest of regression trees, according to a predetermined confidence criterion, in which the prediction can be evaluated for at least one possible association as being correct or incorrect according to the predetermined confidence criterion, and
updating the regression tree forest including a deactivation of one or more possible associations, depending on the evaluation of said possible associations.

8. The device according to claim 7, wherein said computing machine is dedicated to or configured for at least one possible association, evaluating the prediction as correct or incorrect according to the predetermined confidence criteria.

9. The device according to claim 8, further comprising a module dedicated to or configured to update pose parameters related to said camera, according to the possible associations assessed as correct or incorrect.

10. An augmented reality system comprising:

- a camera capable of acquiring an image of a three-dimensional scene,
- a module capable of delivering an output image from an input image acquired by said camera, representing said scene in three dimensions and at least one real or virtual object, from :

◦ a 3D representation of the at least one object in the scene, and
◦ camera pose parameters,

- a display module capable of displaying the output image,

**characterised by the fact that** it comprises a device according to claim 9 for updating the installation parameters of said camera.

11. A computer program comprising instructions for implementing a method according to any of claims 1 to 6, when said program is executed by a processor.

12. A computer-readable storage medium having recorded thereon a computer program comprising program code instructions for performing steps of a method according to any one of claims 1 to 6.

FIG. 1

10

Image k

20

21

Extraction d'une ou plusieurs représentations 2D

Représentations 2D

22

Prédiction de la représentation 3D à partir des représentations 2D

23

FIG. 2

FIG. 3

FIG. 4

FIG. 5

Forêt d'arbres de régression initiale — 30

23 — 230

231 — Forêt d'arbres de régression k-1

232 — Détection des associations possibles à inactiver

233 — Forêt d'arbres de régression k-1 modifiée

234 — Mise à jour des associations possibles

Résultats correspondant à l'image k-1

60a

Forêt d'arbres de régression k

235

Prédiction d'une représentation 3D en fonction de représentations 2D et de la forêt d'arbres de régression k

236

Représentations 2D

22

40 — Prédictions

501 — Post-traitement

503 — validation

502 — Prédictions traitées

60 — Résultats correspondant à l'image k

50

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **F. WALCH** ; **C. HAZIRBAS** ; **L. LEAL-TAIXE** ; **T. SATTLER** ; **S. HILSENBECK** ; **D. CREMERS**. Image-based localization using LSTMs for structured feature correlation. *IEEE International Conference on Computer Vision 5ICCV*, October 2017
- Accurate Sparse Feature Regression Forest Learning for Real-time Camera Relocalization. **DUONG NAM-DUONG et al.** International conference on 3D vision (3DV). IEEE, 05 September 2018, 643-652
- On-the-fly Adaptation of Regression Forests for Online Camera Relocalisation. **TOMMASO CAVAL-LARI**. ARXIV.ORG. Cornell University Library, 09 February 2017
- **BAY et al.** Speeded-up Robust Features (SURF). *Computer Vision and Image Understanding*, 2008, 346-359
- **A. KENDALL** ; **M. GRIME** ; **R. CIPOLLA**. Posenet : A convulational network for real-time 6-DOF camera relocalization. *Proceedings de la IEEE International Conference on Computer Vision*, 2015, 2938-2946
- Accurate sparse feature regression forest learning for real-time camera relocalization. **N.-D. DUONG** ; **A. KACETE** ; **C. SOLADIÉ** ; **P.-Y. RICHARD** ; **J. ROYAN**. International Conference on 3D Vision (3DV). IEEE, 2018, 643-652
- **J. SHOTTON** ; **B. GLOCKER** ; **C. ZACH** ; **S. IZADI** ; **A. CRIMINISI** ; **A. FITZGIBBON**. Scene coordinate regression forests for camera relocalization in rgb-d images. *Proceedings of the IEEE conference of Computer Vision and Pattern Recognition*, 2013, 2930-2937
- **R. HARTLEY** ; **A. ZISSERMAN**. Multiple view geometry in computer vision. *Robotica*, 2005, vol. 23 (2), 271-271